# EUROPÄISCHE PATENTANMELDUNG

(11) **EP 4 574 378 A1**
(43) Veröffentlichungstag der Anmeldung: **25.06.2025**
(21) Anmeldenummer: 23219941.4
(22) Anmeldetag: 22.12.2023
(51) Int. Cl.: B29B 17/02, B03B 5/28, B29K 23/00, B29K 27/06, B29K 67/00, B29K 75/00, B29K 77/00, B03C 1/023, B03C 1/23, B03C 1/30, B03C 7/00, B03C 7/02

(54) **VERFAHREN UND VORRICHTUNG ZUR TRENNUNG VON TEILCHEN AUS VERSCHIEDENEN KUNSTSTOFFEN**

(71) Anmelder: D&G Recycling GmbH, 86720 Nördlingen (DE)
(72) Erfinder: Götz, Andreas, 86720 Nördlingen (DE); Deinert, Dr. Jürgen, 37115 Duderstadt (DE)
(74) Vertreter: REHBERG HÜPPE + PARTNER

(57) **Zusammenfassung**

Zur Trennung von Teilchen (6) aus verschiedenen Kunststoffen werden die Teilchen (6) in einer ersten Flüssigkeit (10) mit einer ersten Dichte suspendiert und in erste leichte Teilchen (11) mit einer geringeren Dichte und erste schwere Teilchen (12) mindestens von der ersten Dichte getrennt. Die ersten schweren Teilchen (12) werden getrocknet und anschließend durch eine erste elektrostatische Separation (19) aufgrund ihrer dielektrischen Eigenschaften mindestens in eine erste Fraktion (21) und eine zweite Fraktion (22), deren Teilchen elektrostatisch aufladbar sind, aufgetrennt. Dann werden die Teilchen der zweiten Fraktion (22) in einer zweiten Flüssigkeit (25) mit einer größeren zweiten Dichte suspendiert und in zweite leichte Teilchen (27) mit einer geringeren Dichte und zweite schwere Teilchen (28) mindestens von der zweiten Dichte getrennt. Die zweiten leichten Teilchen (27) werden getrocknet und anschließend durch eine zweite elektrostatische Separation (32) aufgrund ihrer dielektrischen Eigenschaften in mindestens zwei weitere Fraktionen (34, 35) aufgetrennt.

## Beschreibung

### TECHNISCHES GEBIET DER ERFINDUNG

Die Erfindung bezieht sich auf ein Verfahren und eine Vorrichtung zur Trennung von Teilchen aus verschiedenen Kunststoffen. Insbesondere bezieht sich die Erfindung auf ein Verfahren mit den Merkmalen des Oberbegriffs des unabhängigen Patentanspruchs 1 und eine Vorrichtung mit den Merkmalen des Oberbegriffs des unabhängigen Patentanspruchs 14.

Die Wiederverwertung von Kunststoffen in hochwertigen Produkten erfordert eine Trennung der Kunststoffe in sortenreine Fraktionen. Diese Trennung erweist sich selbst dann als herausfordernd, wenn keine Verbundmaterialien aus verschiedenen Kunststoffen vorliegen oder solche Verbundmaterialien durch Zerkleinern in Teilchen aufgetrennt werden können, die jeweils nur aus einem Kunststoff bestehen.

### STAND DER TECHNIK

Ein Verfahren zur Trennung von Teilchen aus verschiedenen Kunststoffen mit den Merkmalen des Oberbegriffs des unabhängigen Patentanspruchs 1 und eine entsprechende Vorrichtung mit den Merkmalen des Oberbegriffs des unabhängigen Patentanspruch 14 gehen aus der DE 20 2021 000 353 U1 hervor. Um ein Polyvinylchlorid-(PVC-)Rezyklat, das maximal ein Gew.-% Polyolefine enthält, aus Kabelrezyklat herzustellen, wird zunächst mittels Schwimm/Sink-Verfahren bei einer Trenndichte von 1,00 bis 1,23 g/cm³ eine Sinkfraktion abgetrennt. Diese Sinkfraktion wird mechanisch mittels Zentrifuge und zusätzlich thermisch getrocknet. Dann wird aus der Sinkfraktion mittels elektrostatischer Separation PVC abgetrennt. Dabei wird erheblicher Aufwand betrieben, um die Sinkfraktion mechanisch bis auf einen hohen Trocknungsgrad von maximal 0,4 Gew.-% Restfeuchtigkeit vorzutrocknen. Eine elektrostatische Separation ist bekanntermaßen nur bei einer Restfeuchte von maximal 0,2 Gew.-% durchführbar, die bei der anschließenden thermischen Trocknung erreicht werden muss. Durch das Schwimm/Sink-Verfahren soll nicht nur eine Leichtfraktion als solche von dem Kabelrezyklat abgetrennt werden, sondern es sollen auch solche Fraktionen entfernt werden, die eine spezifische Aufladung des PVC bei der elektrostatischen Separation verhindern. Nach der Abtrennung der Leichtfraktion und der nachfolgenden mechanischen und thermischen Trocknung soll PVC hingegen auf Grund seiner Stellung in der elektrostatischen Reihe derart aufgeladen werden können, dass die als Fremdmaterial vorhandenen Gummi-, Fluorelastomer- und Silikonelastomeranteile elektrostatisch abgetrennt werden können und die geforderte Reinheit sowie die gewünschten Materialeigenschaften des PVC erreicht werden können. Zudem werden bei dem bekannten Verfahren Buntmetalle zwischen der Trocknung und der elektrostatischen Separation mittels eines Wirbelstromabscheiders abgetrennt. Es stellt sich heraus, dass das bekannte Verfahren allenfalls geeignet ist, Teilchen aus PVC von Teilchen aus anderen Kunststoffen zu trennen.

### AUFGABE DER ERFINDUNG

Der Erfindung liegt die Aufgabe zugrunde, ein Verfahren und eine Vorrichtung zur Trennung von Teilchen aus verschiedenen Kunststoffen aufzuzeigen, mit der weitere hochwertige sortenreine Fraktionen der Teilchen gewonnen werden.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 14 gelöst. Die abhängigen Patentansprüche betreffen bevorzugte Ausführungsformen des erfindungsgemäßen Verfahrens und der erfindungsgemäßen Vorrichtung.

### BESCHREIBUNG DER ERFINDUNG

Bei einem erfindungsgemäßen Verfahren zur Trennung von Teilchen aus verschiedenen Kunststoffen werden die Teilchen in einer ersten Flüssigkeit mit einer ersten Dichte suspendiert und in erste leichte Teilchen mit einer geringeren Dichte als die erste Dichte und in erste schwere Teilchen mit einer Dichte mindestens von der ersten Dichte getrennt. Zumindest die ersten leichten Teilchen oder die ersten schweren Teilchen werden zu ersten getrockneten Teilchen getrocknet. Die ersten getrockneten Teilchen werden durch eine erste elektrostatische Separation auf Grund ihrer dielektrischen Eigenschaften mindestens in eine erste Fraktion und eine zweite Fraktion aufgetrennt, wobei die Teilchen der zweiten Fraktion elektrostatisch aufladbar sind. Die elektrostatisch aufladbaren Teilchen der zweiten Fraktion werden in einer zweiten Flüssigkeit mit einer zweiten Dichte suspendiert und in zweite leichte Teilchen mit einer geringeren Dichte als die zweite Dichte und in zweite schwere Teilchen mit einer Dichte mindestens von der zweiten Dichte getrennt. Zumindest die zweiten leichten Teilchen oder die zweiten schweren Teilchen werden zu zweiten getrockneten Teilchen getrocknet. Die zweiten getrockneten Teilchen werden durch eine zweite elektrostatische Separation auf Grund ihrer dielektrischen Eigenschaften in mindestens zwei weitere Fraktionen aufgetrennt. Durch die Wiederholung der Dichtetrennung mit Hilfe einer zweiten Flüssigkeit, deren zweiten Dichte sich von der ersten Dichte der ersten Flüssigkeit um typischerweise mindestens 0,10 g/cm³ unterscheidet, werden die elektrostatisch aufladbaren Teilchen der zweiten Fraktion weiter aufgeteilt, wobei weitere sortenreine Fraktionen gewonnen werden können, so dass es tatsächlich lohnenswert ist, den zusätzlichen Aufwand, insbesondere für die neuerliche Trocknung der Teilchen nach ihrer zweiten Dichtetrennung mit Hilfe der zweiten Flüssigkeit zu betreiben.

Das erfindungsgemäße Verfahren erzielt die zusätzlichen sortenreinen Fraktionen der Teilchen nicht durch eine vielleicht naheliegende Dichtetrennung der Teilchen direkt nacheinander mit Hilfe verschiedener Flüssigkeiten unterschiedlicher Dichte. Vielmehr erfolgen nach der ersten Dichtetrennung eine erste Trocknung und eine erste elektrostatische Separation, und nur eine der dabei erhaltenen Fraktionen, deren Teilchen elektrostatisch aufladbar sind, wird der zweiten Dichtetrennung und dann einer neuerlichen Trocknung und einer weiteren elektrostatischen Separation unterworfen. Der Vorteil weiterer sortenreiner Fraktionen der Teilchen stellt sich überraschend ein; und nur dann, wenn der damit verbundene, bereits angesprochene hohe zusätzliche Trocknungsaufwand in Kauf genommen wird, werden die zusätzlichen sortenreinen Fraktionen der Teilchen erhalten.

Als besonders vorteilhaft erweist es sich, wenn zumindest die Flüssigkeit mit der größeren Dichte, die bei einer der Dichtetrennungen des erfindungsgemäßen Verfahren zum Einsatz kommt, auf einer Lösung von Natriumphosphinat in Wasser basiert, das heißt, dass die Dichte durch Zugabe von Natriumphosphinat zu Wasser eingestellt wird, wobei die Flüssigkeit in begrenztem Umfang von nicht mehr als 20 Gew.-% und in der Regel von nicht mehr als 10 oder 5 Gewichtsprozent weitere Zusätze enthalten kann. Diese Zusätze können beispielsweise oberflächenaktive Mittel sein, die eine vollständige Benetzung der Teilchen mit der jeweiligen Flüssigkeit erleichtern und den Einschluss von Luftblasen verhindern. Beides sind Maßnahmen, die die Qualität der Dichtetrennung verbessern. Natriumphosphinat ist gut in Wasser löslich, um eine gewünschte erhöhte Dichte Flüssigkeit zu erreichen. Vor allem aber lässt sich Natriumphosphinat gut mechanisch mit der Flüssigkeit von den Teilchen wieder entfernen und nach einer Trocknung zurückbleibende Reste des Natriumphosphinat behindern die elektrostatische Separation der Teilchen im Rahmen des erfindungsgemäßen Verfahrens nicht.

Soweit der ersten und/oder der zweiten Flüssigkeit bei dem erfindungsgemäßen Verfahren oberflächenaktive Mittel zugesetzt werden, ist darauf zu achten, dass auch diese die mindestens eine noch nachfolgende elektrostatische Separation nicht beeinträchtigen. Eine solche Beeinträchtigung kann mit dem Einsatz von antistatischen Mitteln verbunden sein, die zwar für die Dichtetrennung hilfreich, für eine nachfolgende elektrostatische Separation aber sehr hinderlich sein können, da sie eine elektrostatische Aufladung auch von grundsätzlich aufladbaren Teilchen verhindern können. Als sehr geeignetes oberflächenaktives Mittel, das der ersten Flüssigkeit und/oder der zweiten Flüssigkeit zugesetzt werden kann, ohne die mindestens eine noch nachfolgende elektrostatische Separation zu gefährden, hat sich Ethanol herausgestellt. Konkret kann die erste Flüssigkeit und/oder die zweite Flüssigkeit 5 bis 10 Gew.-% Ethanol aufwiesen. Eine damit einhergehende Reduktion der Dichte der jeweiligen Flüssigkeit kann durch Zugabe von Natriumphosphinat ausgeglichen werden. Der Zusatz des Ethanols zu Wasser schränkt die Löslichkeit von Natriumphosphinat in Wasser in keinem für die vorliegende Erfindung relevanten Umfang ein.

Die erste Dichte der ersten Flüssigkeit kann 1,00 g/cm³ +/- 0,03 g/cm³ und vorzugsweise 1,00 g/cm³ +/- 0,01 g/cm³ sein. Konkret kann die erste Flüssigkeit dabei zumindest weit überwiegend aus Wasser bestehen. Bei dieser ersten Dichte werden vorzugsweise die ersten schweren Teilchen, die mindestens die erste Dichte aufweisen, zu den ersten getrockneten Teilchen getrocknet. Anders gesagt wird durch die erste Dichtetrennung mit der ersten Flüssigkeit eine Leichtfraktion mit einer Dichte kleiner als 1,00 g/cm³ abgetrennt. Diese Leichtfraktion kann zumindest überwiegend aus Polyethylen und EPDM niedriger Dichte bestehen. Hier und an anderen Stellen dieser Beschreibung und der anhängenden Patentansprüche ist die Angabe "überwiegend" wörtlich zu verstehen, das heißt in dem Sinne, dass die Substanz, aus der die jeweiligen Teilchen überwiegend bestehen, mehr als 50 Gew.-% der Teilchen ausmacht.

Bei der ersten elektrostatischen Separation können die ersten getrockneten Teilchen neben der ersten Fraktion und der zweiten Fraktion auch in eine dritte Fraktion aufgetrennt werden. Dabei kann die erste Fraktion Teilchen ohne ausgeprägte elektrostatische Ladung, die zweite Fraktion Teilchen mit positiver elektrostatischer Ladung und die dritte Fraktion Teilchen mit negativer elektrostatischer Ladung umfassen. Die im Rahmen der ersten elektrostatischen Separation und der zweiten elektrostatischen Separation erfolgenden elektrostatische Aufladungen können - unabhängig voneinander - insbesondere durch Reibung und/oder elektrische Entladungen hervorgerufen werden. Die Ladungen der einzelnen Teilchen nach Ihrer elektrostatischen Aufladung hängen von ihren relativen spezifischen Kapazitäten in der Dimension Ladung pro Fläche ab. Die Teilchen mit der mittleren Kapazität verhalten sich neutral und bilden die erste Fraktion aus. Die Teilchen mit größeren Kapazitäten laden sich positiv auf und bilden die zweite Fraktion aus; die Teilchen mit kleineren Kapazitäten laden sich negativ auf und bilden die dritte Fraktion der drei Fraktionen aus.

Konkret können die Teilchen der ersten Fraktion überwiegend aus PVC-w bestehen, während die Teilchen der dritten Fraktion zumindest überwiegend aus füllstoffhaltigem EPDM und anderem EPDM hoher Dichte, das heißt EPDM mit einer Dichte größer als 1,00 g/cm³ bestehen.

Die zweite Dichte der zweiten Flüssigkeit, mit deren Hilfe die zweite Dichtetrennung erfolgt, kann 1,23 g/cm³ +/- 0,03 g/cm³ sein und beträgt vorzugsweise 1,23 g/cm³ +/- 0,01 g/cm³. Wenn dann die zweiten leichten Teilchen zu den zweiten getrockneten Teilchen getrocknet werden, wobei die Trocknung ebenso wie die Trocknung zu den ersten getrockneten Teilchen vorzugsweise zunächst mechanisch und dann thermisch erfolgt, können die zweiten leichten Teilchen zumindest überwiegend aus PA und PU bestehen. Durch die zweite elektrostatische Separation können die zweiten leichten Teilchen dann in eine weitere Fraktion zumindest überwiegend aus PA und eine andere weitere Fraktion zumindest überwiegend aus PU aufgetrennt werden. Die zweiten schweren Teilchen bestehen dabei zumindest überwiegend aus Fluorelastomer, Silikonelastomer, PET und/oder CA.

Bei dem erfindungsgemäßen Verfahren können elektrisch leitfähige Teilchen abgetrennt werden, beispielsweise durch Wirbelstromseparation. Dabei kann die Wirbelstromseparation irgendwo stromauf der ersten elektrostatischen Separation durchgeführt zu werden, um die elektrisch leitfähigen Teilchen zuvor abzutrennen. Anderenfalls gelangen die elektrisch leitfähigen Teilchen in die oben angesprochene erste Fraktion der Teilchen ohne elektrostatische Ladung. Wirbelstromseparation ist allerdings nicht zur Abtrennung aller elektrisch leitfähigen Teilchen geeignet. So sind ferromagnetische Teilchen durch Wirbelstromseparation nicht abtrennbar. Neben Teilchen aus nicht ferromagnetischen Metallen sind aber auch Teilchen aus elektrisch leitfähigen Kunststoffen durch Wirbelstromseparation abtrennbar.

Weiterhin können ferromagnetische Teilchen bei dem erfindungsgemäßen Verfahren abgetrennt werden. Dies geschieht insbesondere durch magnetische Separation mit Hilfe eines Elektromagneten. Die magnetische Separation erfolgt ebenfalls vorzugsweise stromauf der ersten elektrostatischen Separation. Sie trennt auch ferromagnetische elektrisch leitfähige Teilchen ab, die durch eine Wirbelstromseparation nicht abtrennbar sind. Durch magnetische Separation können auch Teilchen aus Kunststoffen entfernt werden, die durch entsprechende metallische Zuschläge ferromagnetisch Eigenschaften aufweisen.

Weiterhin können bei dem erfindungsgemäßen Verfahren elektrisch polarisierbare Teilchen abgetrennt werden. Dies kann beispielsweise durch eine Separation mit Hilfe eines starken E-Feldgradienten erfolgen, der abhängig von deren elektrischen Polarisierbarkeit unterschiedlich große Kräfte auf die Teilchen in Richtung des e-Feldgradienten zur Folge hat.

Bei dem erfindungsgemäßen Verfahren erweist es sich als günstig, wenn eine Teilchengröße der Teilchen zu Beginn ihrer Trennung auf 1 mm bis 6 mm und vorzugsweise 2 mm bis 6 mm eingestellt wird, beispielsweise durch Vermahlen und Sieben, und besonders bevorzugt mit einer Genauigkeit von mindestens +/- 1,5 mm und noch mehr bevorzugt mit einer Genauigkeit von mindestens +/- 1,0 mm. Eine möglichst gleiche Größe aller Teilchen eliminiert Einflüsse der Teilchengröße, die grundsätzlich sowohl bei einer Dichtetrennung mit Hilfe einer Flüssigkeit als auch bei einer elektrostatischen Separation als auch bei einer Wirbelstromseparation als auch bei einer magnetischen Separation als auch bei einer E-Feldgradient-Separation auftreten können. Insbesondere für die Dichtetrennung und die elektrostatische Separation hat es sich als günstig herausgestellt, die Teilchengröße nicht nur möglichst genau, sondern gerade innerhalb des Bereichs von 1 mm bis 6 mm einzustellen, wobei möglichst alle Teilchen in eben diesem Bereich fallen, so dass die mittlere Teilchengröße je nach Genauigkeit zwischen 2,5 und 4,5 mm oder zwischen 2 und 5 mm liegt.

Eine erfindungsgemäße Vorrichtung zur Trennung von Teilchen aus verschiedenen Kunststoffen weist einen ersten Dichteseparator auf, der dazu ausgebildet ist, die in einer ersten Flüssigkeit mit einer ersten Dichte suspendierten Teilchen in erste leichte Teilchen mit einer geringeren Dichte als die erste Dichte und in erste schwere Teilchen mit einer Dichte mindestens von der ersten Dichte zu trennen. Die Vorrichtung weist weiterhin einen ersten Trockner auf, der dazu ausgebildet und angeordnet ist, die ersten leichten Teilchen oder vorzugsweise die ersten schweren Teilchen zu ersten getrockneten Teilchen zu trocknen, und einen ersten elektrostatischen Separator, der dazu ausgebildet und angeordnet ist, die ersten getrockneten Teilchen durch eine erste elektrostatische Separation aufgrund ihrer dielektrischen Eigenschaften mindestens in eine erste Fraktion und eine zweite Fraktion aufzutrennen, wobei die Teilchen der zweiten Fraktion elektrostatisch aufladbar sind. Die Vorrichtung weiterhin weist einen zweiten Dichteseparator auf, der dazu ausgebildet ist, die in einer zweiten Flüssigkeit mit einer zweiten Dichte suspendierten elektrostatisch aufladbaren Teilchen der zweiten Fraktion in zweite leichte Teilchen mit einer geringeren Dichte als der zweiten Dichte und in zweite schwere Teilchen mit einer Dichte mindestens von der zweiten Dichte zu trennen. Ein zweiter Trockner der Vorrichtung ist dazu ausgebildet und angeordnet, die zweiten schweren Teilchen oder vorzugsweise die zweiten leichten Teilchen zu zweiten getrockneten Teilchen zu trockenen. Dann weist die Vorrichtung einen zweiten elektrostatischen Separator auf, der dazu ausgebildet und angeordnet ist, die zweiten getrockneten Teilchen durch eine zweite elektrostatische Separation aufgrund ihrer dielektrischen Eigenschaften in mindestens zwei weitere Fraktionen aufzutrennen.

Vorzugsweise ist der elektrostatische Separator dazu ausgebildet, die ersten getrockneten Teilchen in die erste Fraktion, die zweite Fraktion und eine dritte Fraktion aufzutrennen, wobei die erste Fraktion Teilchen ohne ausgeprägte elektrostatische Ladung umfasst und wobei die zweite Fraktion positiv elektrostatisch aufgeladene und die dritte Fraktion negativ elektrostatisch aufgeladene Teilchen umfasst.

Wie schon angedeutet wurde, können die Trockner jeweils mechanische und thermische Komponenten aufweisen, also beispielsweise eine Zentrifuge und einen Infrarotofen. Weiterhin kann die Vorrichtung zusätzlich, insbesondere stromauf des ersten elektrostatischen Separators einen Wirbelstromseparator und/oder einen magnetischen Separator und/oder einen e-Feldgradient-Separator aufweisen.

Als elektrostatische Separatoren sind kommerziell verfügbare industrielle elektrostatische Separatoren mit elektrostatischer Aufladung durch Reibung und/oder elektrische Entladungen einsetzbar.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem ersten Trockner die Rede ist, ist dies so zu verstehen, dass genau ein erster Trockner, zwei erste Trockner oder mehr erste Trockner vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

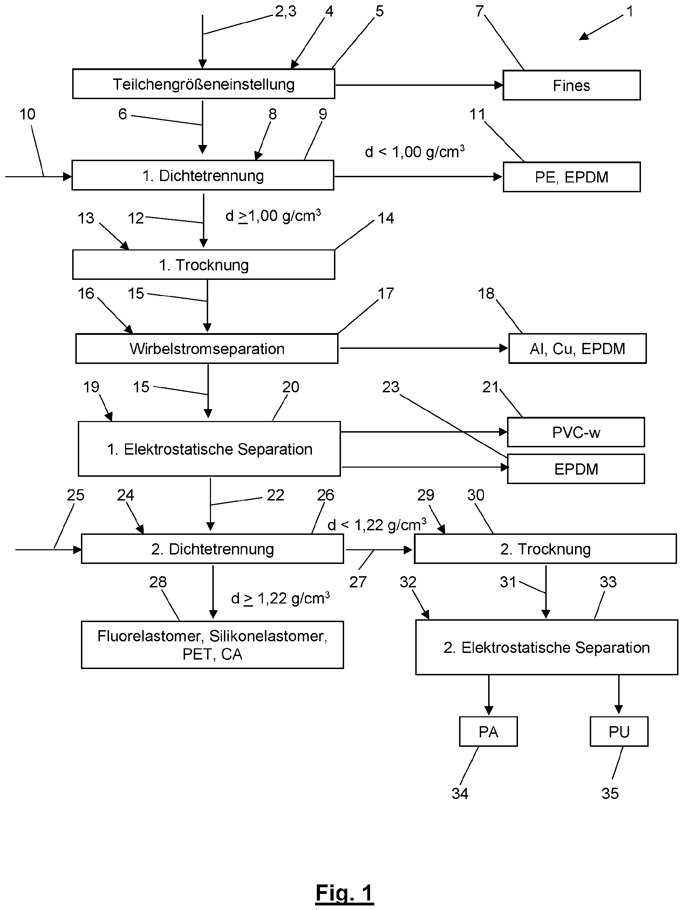

- **Fig. 1**: ist ein Ablaufdiagramm eines erfindungsgemäßen Verfahrens und zugleich ein Blockschaltbild einer erfindungsgemäßen Vorrichtung zur Trennung von Teilchen aus verschiedenen Kunststoffen.

### FIGURENBESCHREIBUNG

**Fig. 1** erläutert den Ablauf eines erfindungsgemäßen Verfahrens und zugleich den Aufbau einer erfindungsgemäßen Vorrichtung 1. Ausgangsmaterial 2 kann sogenanntes Kabelrezyklat 3 sein, dessen wesentliche Bestandteile Polyvinylchlorid mit Weichmacher (PVC-w), Polyethylen (PE), Polyamid (PA), Polyurethan (PU), Fluorelastomer, Silikonelastomer, Ethylen-Propylen-DienKautschuk (EPDM), Polyethylenterephthalat (PET), Celluloseacetat (CA), Kupfer (Cu) und/oder Aluminium (Al) sein können. Durch Vermahlen und Sieben 4 in einer Teilchengrößeneinstelleinrichtung 5 werden Teilchen 6 einer mittleren Teilchengröße im Bereich von 1 bis 6 mm erhalten. Dabei wird eine Feinfraktion 7, d. h. sogenannte Fines, von den Teilchen 6 abgetrennt.

In einer anschließenden ersten Dichtetrennung 8 in einem Dichteseparator 9 werden die Teilchen 6 in einer ersten Flüssigkeit 10 einer ersten Dichte von 1,00 g/cm³ suspendiert und dann in aufschwimmende erste leichte Teilchen 11 einer Dichte kleiner als 1,00 g/cm³ und absinkende erste schwere Teilchen 12 einer Dichte von mindestens 1,00 g/cm³ aufgetrennt. Die ersten leichten Teilchen 11 sind zumindest überwiegend Teilchen aus PE und EPDM niedriger Dichte.

Die ersten schweren Teilchen 12 werden einer ersten Trocknung 13 in einem ersten Trockner 14 unterworfen. Aus der ersten Trocknung 11 resultieren erste getrocknete Teilchen 15. Bei einer Wirbelstromseparation 16 in einem Wirbelstromseparator 17 werden elektrisch leitfähige Teilchen 18 abgetrennt, die nicht ferromagnetisch sind. Die elektrisch leitfähigen Teilchen 18 bestehen zumindest überwiegend aus Aluminium, Kupfer und elektrisch leitfähigem EPDM.

Die verbleibenden ersten getrockneten Teilchen 15 werden einer ersten elektrostatischen Separation 19 in einem ersten elektrostatischen Separator 20 unterworfen. Dabei werden die ersten getrockneten Teilchen 15 in eine erste Fraktion 21, eine zweite Fraktion 22 und eine dritte Fraktion 23 aufgetrennt. Die dritte Fraktion 23 umfasst negativ elektrostatisch aufgeladene Teilchen und besteht zumindest überwiegend aus dem bislang noch nicht abgetrennten EPDM höherer Dichte. Die erste Fraktion 21 umfasst neutrale, d. h. allenfalls schwach elektrostatisch aufgeladene Teilchen und zumindest überwiegend aus PVC-w. Die zweite Fraktion 22 umfasst die positiv elektrostatisch aufgeladenen ersten getrockneten Teilchen 15.

Die zweite Fraktion 22 wird einer zweiten Dichtetrennung 24 mit Hilfe einer zweiten Flüssigkeit 25 einer Dichte von 1,22 g/cm³ in einem zweiten Dichteseparator 26 unterworfen und dadurch in zweite leichte Teilchen 27 einer Dichte von weniger als 1,22 g/cm³ und zweite schwere Teilchen 28 einer Dichte von mindestens 1,22 g/cm³ aufgetrennt. Die zweiten leichten Teilchen 27 werden in einer zweiten Trocknung 29 in einem zweiten Trockner 30 zu zweiten getrockneten Teilchen 31 getrocknet. Die zweiten getrockneten Teilchen 31 werden einer zweiten elektrostatischen Separation 32 in einem zweiten elektrostatischen Separator 33 unterworfen.

Durch die zweite elektrostatische Separation 32 werden die zweiten getrockneten Teilchen 31 in zwei weitere Fraktionen 34 und 35 aus Teilchen unterschiedlich elektrostatischer Aufladung aufgeteilt. Dabei umfasst die eine Fraktion 34 die negativ oder weniger stark positiv elektrostatisch aufgeladenen Teilchen, welche zumindest überwiegend aus PA bestehen, während die andere Fraktion 35 die stärker positiv elektrostatisch aufgeladenen Teilchen umfasst, welche zumindest überwiegend aus PU bestehen.

Die schweren zweiten Teilchen 28 umfassen Teilchen aus Fluorelastomer, Silikonelastomer, PET und CA und können ebenfalls getrocknet und einer weiteren elektrostatischen Separation unterworfen werden, was hier jedoch nicht dargestellt ist.

Das erfindungsgemäße Verfahren nutzt sowohl Unterschiede in der Dichte der Kunststoffe, die in dem Ausgangsmaterial 2, das heißt dem Kabelrezyklat 3, enthalten sind, als auch unterschiedliche elektrostatische Aufladbarkeiten, wie sie in der folgenden Tabelle aufgeführt sind. Dabei gibt die Kapazität in Mikrocoulomb pro Quadratmeter die flächenspezifische elektrostatische Ladung an, auf die die (nicht leitfähig gemachten) Teilchen aus dem jeweiligen Kunststoff unter gleicher Bedingung elektrostatisch aufgeladen werden können.

Die elektrostatische Separation trennt nicht unmittelbar hinsichtlich der Kapazität, also der Stärke der Aufladbarkeit. Für die elektrostatische Separation muss eine Differenz der Kapazitäten vorhanden sein. In einem Gemisch aus drei Kunststoffen verhält sich der Kunststoff mit einer mittleren Kapazität bei der elektrooptischen Aufladung, beispielsweise durch Reibung, als neutral, d. h. die entsprechenden Teilchen werden nicht signifikant elektrostatisch aufgeladen. Die Teilchen aus Kunststoffen mit hoher Kapazität laden sich positiv auf; die mit niedriger Kapazität laden sich negativ auf. Dies gilt, obwohl alle angeführten Kunststoffe positive Werte für ihre Kapazität aufweisen. So verhält sich PVC-w beispielsweise neutral, während PA, PU, PET, CA, Silikon- und Fluorelastomer positiv und PE und EPDM-Gummi negativ aufgeladen werden.

| | Dichte [g/cm³] | Kapazität [µC/m²] |
|---|---|---|
| PVC-w | 1,30 - 1,50 | 84 |
| PE | 0,91 - 0,96 | 67 |
| PA | 1,03-1,08 | 96 |
| PU | 1,21 - 1,22 | 109 |
| PET | 1,38 | 101 |
| CA | 1,27-1,30 | 134 |
| EPDM-Gummi | 0,96-2,10 | 55 |
| Silikonelastomer | 1,20-1,30 | 94 |
| Fluorelastomer | 1,96-2,20 | 148 |

### BEZUGSZEICHENLISTE

- 1: Vorrichtung
- 2: Ausgangsmaterial
- 3: Kabelrezyklat
- 4: Vermahlen und Sieben
- 5: Teilchengrößeneinstelleinrichtung
- 6: Teilchen
- 7: Feinfraktion
- 8: Erste Dichtetrennung
- 9: Erster Dichteseparator
- 10: Erste Flüssigkeit
- 11: Erste leichte Teilchen
- 12: Erster schwere Teilchen
- 13: Erste Trocknung
- 14: Erster Trockner
- 15: Erste getrocknete Teilchen
- 16: Wirbelstromseparation
- 17: Wirbelstromseparator
- 18: Nicht ferromagnetische elektrisch leitfähige Teilchen
- 19: Erste elektrostatische Separation
- 20: Erster elektrostatischer Separator
- 21: Erste Fraktion
- 22: Zweite Fraktion
- 23: Dritte Fraktion
- 24: Zweite Dichtetrennung
- 25: Zweite Flüssigkeit
- 26: Zweiter Dichteseparator
- 27: Zweite leichte Teilchen
- 28: Zweite schwere Teilchen
- 29: Zweite Trocknung
- 30: Weitere Fraktion
- 31: Zweite getrocknete Teilchen
- 32: Zweite elektrostatische Separation
- 33: Zweiter elektrostatische Separator
- 34: Weitere Fraktion
- 35: Weitere Fraktion

## Patentansprüche

1. Verfahren zur Trennung von Teilchen (6) aus verschiedenen Kunststoffen,
- wobei die Teilchen (6) in einer ersten Flüssigkeit (10) mit einer ersten Dichte suspendiert und in erste leichte Teilchen (11) mit einer geringeren Dichte als die erste Dichte und in erste schwere Teilchen (12) mit einer Dichte mindestens von der ersten Dichte getrennt werden,
- wobei mindestens die ersten leichten Teilchen (11) oder die ersten schweren Teilchen (12) zu ersten getrockneten Teilchen (15) getrocknet werden und
- wobei die ersten getrockneten Teilchen (15) durch eine erste elektrostatische Separation (19) aufgrund ihrer dielektrischen Eigenschaften mindestens in eine erste Fraktion (21) und eine zweite Fraktion (22) aufgetrennt werden, wobei die Teilchen der zweiten Fraktion (22) elektrostatisch aufladbar sind,
**dadurch gekennzeichnet,**
- **dass** die elektrostatisch aufladbaren Teilchen der zweiten Fraktion (22) in einer zweiten Flüssigkeit (25) mit einer sich von der ersten Dichte unterscheidenden zweiten Dichte suspendiert und in zweite leichte Teilchen (27) mit einer geringeren Dichte als die zweite Dichte und in zweite schwere Teilchen (28) mit einer Dichte mindestens von der zweiten Dichte getrennt werden,
- wobei mindestens die zweiten leichten Teilchen (27) oder die zweiten schweren Teilchen (28) zu zweiten getrockneten Teilchen (31) getrocknet werden und
- wobei die zweiten getrockneten Teilchen (31) durch eine zweite elektrostatische Separation (32) aufgrund ihrer dielektrischen Eigenschaften in mindestens zwei weitere Fraktionen (34, 35) aufgetrennt werden.

2. Verfahren nach Anspruch 1, **wobei** zumindest die erste Flüssigkeit (10) oder die zweite Flüssigkeit (25) mit der größeren der ersten Dichte und der zweiten Dichte auf einer Lösung von Natriumphosphinat in Wasser basiert.

3. Verfahren nach Anspruch 1 oder 2, **wobei** zumindest die erste Flüssigkeit (10) oder die zweite Flüssigkeit (25) 5 bis 10 Gewichtsprozent Ethanol aufweist.

4. Verfahren nach einem der vorhergehenden Ansprüche, **wobei** die erste Dichte 1,00 g/cm³ +/- 0,03 g/cm³ und vorzugsweise 1,00 g/cm³ +/- 0,01 g/cm³ ist und wobei die ersten schweren Teilchen (12), vorzugsweise mechanisch und thermisch, zu den ersten getrockneten Teilchen (15) getrocknet werden.

5. Verfahren nach Anspruch 4, **wobei** die ersten leichten Teilchen (11) zumindest überwiegend aus PE und/oder EPDM niedriger Dichte bestehen.

6. Verfahren nach einem der vorhergehenden Ansprüche, **wobei** die ersten getrockneten Teilchen (15) in die erste Fraktion (21), die zweite Fraktion (22) und eine dritte Fraktion (23) aufgetrennt werden, wobei optional die erste Fraktion (21) Teilchen ohne elektrostatische Ladung, die zweite Fraktion (22) Teilchen mit positiver elektrostatischer Ladung und die dritte Fraktion (23) Teilchen mit negativer elektrostatischer Ladung umfasst.

7. Verfahren nach Anspruch 6 soweit rückbezogen auf Anspruch 4 oder 5, **wobei** die erste Fraktion (21) zumindest überwiegend aus PVC-w besteht und die dritte Fraktion (23) zumindest überwiegend aus EPDM höherer Dichte besteht.

8. Verfahren nach einem der vorhergehenden Ansprüche, **wobei** die zweite Dichte 1,23 g/cm³ +/- 0,03 g/cm³ und vorzugsweise 1,23 g/cm³ +/- 0,01 g/cm³ ist und wobei die zweiten leichten Teilchen (27), vorzugsweise mechanisch und thermisch, zu den zweiten getrockneten Teilchen (31) getrocknet werden.

9. Verfahren nach Anspruch 8, **wobei** die zweiten getrockneten Teilchen (31) zumindest überwiegend aus PA und PU bestehen und durch die zweite elektrostatische Separation (32) in eine weitere Fraktion (34) zumindest überwiegend aus PA und eine andere weitere Fraktion (35) zumindest überwiegend aus PU aufgetrennt werden und wobei die zweiten schweren Teilchen (28) zumindest überwiegend aus Fluorelastomer, Silikonelastomer, PET und/oder CA bestehen.

10. Verfahren nach einem der vorhergehenden Ansprüche, **wobei** elektrisch leitfähige Teilchen (18) abgetrennt werden, optional durch Wirbelstromseparation.

11. Verfahren nach einem der vorhergehenden Ansprüche, **wobei** ferromagnetische Teilchen abgetrennt werden, optional durch magnetische Separation.

12. Verfahren nach einem der vorhergehenden Ansprüche, **wobei** elektrisch polarisierbare Teilchen abgetrennt werden, optional durch E-Feldgradient-Separation.

13. Verfahren nach einem der vorhergehenden Ansprüche, **wobei** eine Teilchengröße der Teilchen (6) auf 1 mm bis 6 mm eingestellt wird, optional durch Vermahlen und Sieben (4) und optional mit einer Genauigkeit von +/- 1,5 mm und vorzugsweise von +/- 1,0 mm.

14. Vorrichtung (1) zur Trennung von Teilchen (6) aus verschiedenen Kunststoffen, mit
- einem ersten Dichteseparator (9), der dazu ausgebildet ist, die in einer ersten Flüssigkeit (10) mit einer ersten Dichte suspendierten Teilchen (6) in erste leichte Teilchen (11) mit einer geringeren Dichte als die erste Dichte und in erste schwere Teilchen (12) mit einer Dichte mindestens von der ersten Dichte zu trennen,
- einem ersten Trockner (14), der dazu ausgebildet und angeordnet ist, die ersten leichten Teilchen (11) oder die ersten schweren Teilchen (12) zu ersten getrockneten Teilchen (15) zu trocknen, und
- einem ersten elektrostatischen Separator (20), der dazu ausgebildet und angeordnet ist, die ersten getrockneten Teilchen (15) durch eine erste elektrostatische Separation (19) aufgrund ihrer dielektrischen Eigenschaften mindestens in eine erste Fraktion (21) und eine zweite Fraktion (22) aufzutrennen, wobei die Teilchen der zweiten Fraktion (22) elektrostatisch aufladbar sind, **gekennzeichnet durch**
- einen zweiten Dichteseparator (26), der dazu ausgebildet ist, die in einer zweiten Flüssigkeit (25) mit einer zweiten Dichte suspendierten elektrostatisch aufladbaren Teilchen der zweiten Fraktion (22) in zweite leichte Teilchen (27) mit einer geringeren Dichte als die zweite Dichte und in zweite schwere Teilchen (28) mit einer Dichte mindestens von der zweiten Dichte zu trennen,
- einem zweiten Trockner (30), der dazu ausgebildet und angeordnet ist, die zweiten leichten Teilchen (27) oder die zweiten schweren Teilchen (28) zu zweiten getrockneten Teilchen (31) zu trocknen, und
- einem zweiten elektrostatischen Separator (33), der dazu ausgebildet und angeordnet ist, die zweiten getrockneten Teilchen (31) durch eine zweite elektrostatische Separation (32) aufgrund ihrer dielektrischen Eigenschaften in mindestens zwei weitere Fraktionen (34, 35) aufzutrennen.

15. Vorrichtung nach Anspruch 14,
- **wobei** der erste Trockner (14) dazu angeordnet ist, die ersten schweren Teilchen (12) zu den ersten getrockneten Teilchen (15) zu trocknen, und/oder
- **wobei** der erste elektrostatische Separator (20) dazu ausgebildet, die ersten getrockneten Teilchen (15) in die erste Fraktion (21), die zweite Fraktion (22) und eine dritte Fraktion (21) aufzutrennen, wobei optional die erste Fraktion (21) Teilchen ohne elektrostatische Ladung, die zweite Fraktion (22) Teilchen mit positiver elektrostatischer Ladung und die dritte Fraktion (23) Teilchen mit negativer elektrostatischer Ladung umfasst, und/oder
- **wobei** der zweite Trockner (30) dazu angeordnet ist, die zweiten leichten Teilchen (27) zu den zweiten getrockneten Teilchen (31) zu trocknen.
